# EUROPÄISCHE PATENTSCHRIFT

(11) **EP 3 668 760 B1**
(45) Veröffentlichungstag und Bekanntmachung des Hinweises auf die Patenterteilung: **29.06.2022**
(21) Anmeldenummer: 18743011.1
(22) Anmeldetag: 18.07.2018
(51) Int. Cl.: B60R 21/015, B60R 21/013

(54) **VERFAHREN ZUM BETREIBEN EINES INSASSENSCHUTZSYSTEMS EINES FAHRZEUGS UND INSASSENSCHUTZSYSTEM FÜR EIN FAHRZEUG**
METHOD FOR OPERATING AN OCCUPANT PROTECTION SYSTEM OF A VEHICLE, AND OCCUPANT PROTECTION SYSTEM FOR A VEHICLE
PROCÉDÉ DE FONCTIONNEMENT D'UN SYSTÈME DE PROTECTION DES OCCUPANTS D'UN VÉHICULE ET SYSTÈME DE PROTECTION DES OCCUPANTS D'UN VÉHICULE

(30) Priorität: 16.08.2017 DE 102017214296
(43) Veröffentlichungstag der Anmeldung: 24.06.2020
(73) Patentinhaber: Audi AG, 85045 Ingolstadt (DE)
(72) Erfinder: KÜHNE, Marcus, 92339 Beilngries (DE); PROFENDINER, Daniel, 85049 Ingolstadt (DE)
(86) Internationale Anmeldenummer: PCT/EP2018/069539
(87) Internationale Veröffentlichungsnummer: WO 2019/034357

(56) Entgegenhaltungen:
- WO-A1-03/013912
- DE-A1-102012 218 842
- DE-A1-102014 019 579
- DE-A1-102015 007 387
- DE-A1-102016 120 430

## Beschreibung

Die Erfindung betrifft ein Verfahren zum Betreiben eines Insassenschutzsystems eines Fahrzeugs und ein Insassenschutzsystem für ein Fahrzeug.

Virtual Reality und auch Augmented Reality durchdringt immer mehr Lebensbereiche und wird voraussichtlich auch in Fahrzeugen, insbesondere in Kraftfahrzeugen, bald eine Funktion zu Unterhaltung von Passagieren ausfüllen. Bislang sind derartige elektronische Datenbrillen, seien es Virtual-Reality-Brillen oder auch Augmented-Reality-Brillen, noch wesentlich schwerer und auch komplexer aufgebaut als herkömmliche Brillen zur Sichtfehlerkorrektur oder Sonnenbrillen, was in bestimmten Situationen, insbesondere in einer Unfallsituation, zu starken Beeinträchtigungen bei Insassenschutzsystemen, beispielsweise bei Airbags oder dergleichen, führen kann.

Der Einsatz von elektronischen Datenbrillen in Form von Virtual-Reality-Brillen wird beispielsweise in der US 2017/0113641 A1 beschrieben. Unter Berücksichtigung einer Relativposition einer von einem Fahrzeuginsassen aufgesetzten elektronischen Datenbrille zu einem Innenraum eines Kraftfahrzeugs wird mittels der elektronischen Datenbrille ein Umfeld des Kraftfahrzeugs eingeblendet. Zudem beschreibt diese Druckschrift noch verschiedene Airbags in Kraftfahrzeugen, beispielsweise Kopfairbags oder auch Airbags, die Fußgänger bei einem Aufprall schützen sollen.

Darüber hinaus beschreiben die WO 2016/169871 A sowie die DE 102 57 963 A1 jeweilige Verfahren, bei welchen eine Position eines Fahrzeuginsassen bestimmt und in Abhängigkeit davon ein Airbag betrieben wird.

Sollte der Fahrzeuginsasse beispielsweise so positioniert sein, dass eine Auslösung des Airbags zur Verletzung führen würde, wird ein Auslösen des Airbags im Crashfall unterbunden, oder es wird beispielsweise die Auslösung des Airbags in Abhängigkeit von einer erfassten Kopfposition verhindert, falls in dieser Position das Risiko einer Verletzung des betroffenen Fahrzeuginsassen als zu hoch eingeschätzt wird.

Die DE 10 2012 218 842 A1 beschreibt die Anpassung eines Rückhaltesystems eines Fahrzeugs. Die Körpergröße und das Gewicht eines Fahrers werden verwendet, um ein Gurtsystem und ein Airbagsystem zu parametrisieren. Basierend auf Informationen von einem sozialen Netzwerk wird zudem extrahiert, ob der Fahrer eine Fehlsichtigkeit hat und deshalb eine Brille trägt. Dies wird dazu verwendet, Rückhaltesysteme für den Fahrer anzupassen.

Es ist die Aufgabe der vorliegenden Erfindung, eine Lösung bereitzustellen, mittels welcher die Sicherheit beim Tragen von elektronischen Datenbrillen in Fahrzeugen erhöht wird.

Diese Aufgabe wird durch ein Verfahren zum Betreiben eines Insassenschutzsystems eines Fahrzeugs sowie durch ein Insassenschutzsystem für ein Fahrzeug mit den Merkmalen der unabhängigen Patenansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Betreiben eines Insassenschutzsystems eines Fahrzeugs wird erfasst, ob ein Fahrzeuginsasse eine elektronischen Datenbrille aufgesetzt hat, wobei das Insassenschutzsystem in Abhängigkeit davon betrieben wird, ob der Fahrzeuginsasse eine elektronische Datenbrille aufgesetzt hat. Bei der elektronischen Datenbrille kann es sich beispielsweise um eine Virtual-Reality-Brille oder auch um eine Augmented-Reality-Brille handeln. Solche Brillen sind derzeit ähnlich groß wie Skibrillen, wobei diese wesentlich tiefer als herkömmliche Skibrillen bauen, insbesondere um erforderliche Elektronik und Displays unterbringen zu können.

Die der Erfindung zugrunde liegenden Überlegungen sind völlig losgelöst von einer u.U. erforderlichen Erlaubnis oder Befürwortung, in einem Fahrzeug eine solche elektronische Datenbrille zu nutzen. Es geht lediglich darum, geeignete Mechanismen zu finden, die Insassen vor möglichen Verletzungen zu schützen können. Grundsätzlich ist auch denkbar, dass das Tragen von solchen elektronischen Datenbrillen - insbesondere auch je nach konkreter Ausgestaltung derartiger Brillen - überhaupt kein erhöhtes Risiko in Fahrzeugen darstellt.

Der Erfindung liegt die Erkenntnis zugrunde, dass gerade beim Tragen solcher elektronischer Datenbrillen das Verletzungsrisiko für Fahrzeuginsassen, insbesondere im Crashfall, erheblich sein kann. Daher wird bei dem erfindungsgemäßen Verfahren erfasst, ob ein Fahrzeuginsasse überhaupt eine elektronische Datenbrille aufgesetzt hat. Sollte dies der Fall sein, wird das Insassenschutzsystem in Abhängigkeit von dieser Erkenntnis betrieben, nämlich dass der Fahrzeuginsasse eine elektronischen Datenbrille aufgesetzt hat.

Zum Erfassen, ob der Fahrzeuginsasse eine elektronischen Datenbrille trägt, können verschiedenste Erfassungseinrichtungen eingesetzt werden, wie beispielsweise herkömmliche Kameras, eine Time-Of-Flight-Kamera, im Prinzip jegliche Sensoren, die dazu in der Lage sind, zu erfassen, ob ein Fahrzeuginsasse gerade eine elektronischen Datenbrille trägt.

Dadurch, dass der Betrieb des Insassenschutzsystems daran angepasst wird, ob ein Fahrzeuginsasse gerade eine elektronischen Datenbrille trägt oder nicht, kann auch bei aufgesetzter elektronischer Datenbrille der Insassenschutz besonders gut gewährleistet werden. Insbesondere im Crashfall, bei welchem üblicherweise sehr starke Beschleunigungen und vor allem Verzögerungen auftreten, kann das Insassenschutzsystem derart betrieben werden, dass berücksichtigt wird, wenn der Fahrzeuginsasse eine elektronische Datenbrille trägt. Dadurch können im Fall der Fälle, also insbesondere bei einem Unfall, Verletzungen beim Träger der elektronischen Datenbrille reduziert oder vollständig verhindert werden. Mit anderen Worten ist es also erfindungsgemäß vorgesehen, dass sobald erkannt wird, dass ein Fahrzeuginsasse eine elektronische Datenbrille trägt, insbesondere die Auslösung von bestimmten Sicherheitsmechanismen des Insassenschutzsystems anders erfolgt als wenn der Fahrzeuginsasse keine elektronische Datenbrille trägt.

Erfindungsgemäß weist das Insassenschutzsystem einen Airbag auf, wobei zumindest ein das Auslöseverhalten des Airbags bestimmender Parameter im Vergleich zu einer Standardeinstellung angepasst wird, wenn der Fahrzeuginsasse eine elektronische Datenbrille aufgesetzt hat. Der Erfindung liegt dabei die Erkenntnis zugrunde, dass insbesondere das Auslösen von Airbags zu Verletzungen bei Fahrzeuginsassen führen kann, wenn diese eine elektronische Datenbrille aufgesetzt haben. Dadurch, dass der betreffende Airbag hinsichtlich seines Auslöseverhaltens angepasst wird, wenn erfasst wird, dass der Fahrzeuginsasse eine elektronische Datenbrille trägt, können Verletzungen beim Fahrzeuginsassen aufgrund des Auslösung des Airbags verhindert oder zumindest auf ein Minimum reduziert werden.

Zudem ist es erfindungsgemäß vorgesehen, dass bei erfasster elektronischer Datenbrille eine relative Anordnung, also sowohl eine Position als auch eine Ausrichtung, der elektronischen Datenbrille zum Airbag ermittelt und in Abhängigkeit davon zumindest ein das Auslöseverhalten des Airbags bestimmender Parameter im Vergleich zu einer Standardeinstellung angepasst wird. Insbesondere kann auch bestimmt werden, wo der Fahrzeuginsasse, der die elektronische Datenbrille trägt, gerade im Fahrzeug sitzt. Dadurch, dass die relative Anordnung der elektronischen Datenbrille zum betreffenden Airbag ermittelt wird, kann das Auslöseverhalten des Airbags für den Crashfall so eingestellt werden, dass trotz aufgesetzter elektronischer Datenbrille das Verletzungsrisiko beim betreffenden Fahrzeuginsassen bei der Auslösung des Airbags auf ein Minimum reduziert wird. Dabei ist eben nicht nur der Abstand der elektronischen Datenbrille zum betreffenden Airbag relevant, sondern vielmehr auch die relative Ausrichtung der elektronischen Datenbrille zum betreffenden Airbag. Im Vergleich zu einem Fahrzeuginsassen, der gerade keine elektronische Datenbrille aufgesetzt hat, wird durch die oft klobigen Maße einer solchen elektronischen Datenbrille unter Umständen das Verletzungsrisiko bei einer herkömmlichen Auslösung des betreffenden Airbags erhöht. Dadurch, dass jedoch sowohl die Positionierung als auch die Ausrichtung der elektronischen Datenbrille zum betreffenden Airbag ermittelt und berücksichtigt wird, kann das Auslöseverhalten des Airbags optimal angepasst und das Verletzungsrisiko beim Träger der elektronischen Datenbrille auf ein Minimum reduziert werden.

Alternativ oder zusätzlich ist es erfindungsgemäß vorgesehen, dass bei erfasster elektronischer Datenbrille Maße der elektronischen Datenbrille ermittelt und in Abhängigkeit davon zumindest ein das Auslöseverhaltens des Airbags bestimmender Parameter im Vergleich zu einer Standardeinstellung angepasst wird. Sollte die elektronische Datenbrille beispielsweise besonders groß sein, so wird das Auslöseverhalten des Airbags anders eingestellt als wenn die elektronische Datenbrille relativ klein sein sollte. Darüber hinaus ist es auch möglich, dass das Gewicht der elektronischen Datenbrille betreffende Daten ebenfalls beim Einstellen des Auslöseverhaltens des betreffenden Airbags berücksichtigt wird. Durch die Berücksichtigung der Maße und/oder des Gewichts der elektronischen Datenbrille kann das Verletzungsrisiko bei einem Auslösen des betreffenden Airbags trotz aufgesetzter elektronischer Datenbrille auf ein Minimum reduziert werden.

In weiterer vorteilhafter Ausgestaltung der Erfindung ist es vorgesehen, dass ein Auslösezeitpunkt, eine Befüllreihenfolge von Kammern des Airbags, und/oder ein Befüllgrad des Airbags angepasst wird. Dies kann allein in Abhängigkeit davon erfolgen, ob einfach nur ermittelt wird, ob der betreffende Fahrzeuginsasse eine elektronische Datenbrille aufgesetzt hat, ob die relative Anordnung der elektronischen Datenbrille zum Airbag ermittelt wird, oder ob auch Maße und/oder das Gewicht der elektronischen Datenbrille ermittelt werden. Je mehr Größen bezüglich der elektronischen Datenbrille berücksichtigt werden, desto besser können die das Auslöseverhalten des Airbags bestimmenden Parameter, insbesondere ein Auslösezeitpunkt, eine Befüllreihenfolge von Kammern des Airbags und/oder ein Befüllgrad des Airbags angepasst werden, um so das Verletzungsrisiko beim Auslösen des Airbags für den Träger der elektronischen Datenbrille im Hinblick auf eventuelle Verletzungen zu minimieren.

Alternativ oder zusätzlich ist es erfindungsgemäß vorgesehen, dass der Airbag deaktiviert wird, solange erfasst wird, dass der Fahrzeuginsasse die elektronische Datenbrille aufgesetzt hat. Diese Entscheidung kann davon abhängig gemacht werden, um welche Art von Airbag es sich handelt. Handelt es sich beispielsweise um einen Beifahrerairbag, wobei der Träger der elektronischen Datenbrille seinen Sitz auch noch soweit vorgerückt hat, dass er besonders nah am Beifahrerairbag sitzt, kann es besonders sinnvoll sein, dass dieser Airbag deaktiviert wird, solange erfasst wird, dass der Fahrzeuginsasse die elektronische Datenbrille aufgesetzt hat. Bei anderen Airbags, beispielsweise bei Seitenairbags oder anderen Airbags, kann es auch sinnvoll sein, dass diese Arten von Airbags gar nicht deaktiviert werden, oder nur dann deaktiviert werden, wenn die von dem Fahrzeuginsassen getragene elektronische Datenbrille gerade besonders ungünstig bezüglich der jeweiligen Airbags ausgerichtet ist, womit ein entsprechend erhöhtes Verletzungsrisiko beim Auslösen der betreffenden Airbags einhergehen würde. Die Deaktivierung von bestimmten Airbags kann also situationsangepasst erfolgen, insbesondere unter Berücksichtigung der relativen Positionierung und Ausrichtung der betreffenden elektronischen Datenbrille zu dem jeweiligen Airbag. Dadurch kann das Risiko von Verletzungen beim Träger der elektronischen Datenbrille, insbesondere in einem Crashfall, auf ein Minimum reduziert werden.

Alternativ oder zusätzlich ist es erfindungsgemäß vorgesehen, dass das Insassenschutzsystem eine Ausgabeeinrichtung umfasst, mittels welcher bei erfasster elektronischer Datenbrille der Fahrzeuginsasse optisch und/oder akustisch informiert wird, inwiefern er eine Positionierung eines Fahrzeugsitzes verändern soll, auf dem er sitzt, um ein Verletzungsrisiko im Crashfall des Fahrzeugs zu minimieren. Die Ausgabeeinrichtung kann beispielsweise fahrzeugseitige Lautsprecher umfassen, mittels welchen der Träger der elektronischen Datenbrille entsprechend instruiert wird. Alternativ oder zusätzlich kann die Ausgabeeinrichtung auch beispielsweise eines oder mehrere Displays der aufgesetzten elektronischen Datenbrille umfassen, mittels welchen der Träger der elektronischen Datenbrille optisch instruiert wird, wie er seinen Fahrzeugsitz eventuell verstellen soll, um ein Verletzungsrisiko im Crashfall des Fahrzeugs zu minimieren, sei es, weil er dann beispielsweise mit der aufgesetzten elektronischen Datenbrille nicht an eine Rückseite eines Fahrzeugsitzes aufschlägt oder im Falle eines Beifahrers und nicht vorhandenem Beifahrerairbag oder deaktiviertem Beifahrerairbag nicht auf dem Dashboard aufschlägt oder dergleichen. Zudem wird der Fahrzeuginsasse entsprechend dafür sensibilisiert, dass bei aufgesetzter elektronischer Datenbrille gewisse Sicherheitsmechanismen im Fahrzeug, insbesondere Airbags, eine Gefährdung darstellen können, zumindest wenn er nicht wie optisch oder akustisch angeleitet seine Positionierung verändert, indem er seinen Fahrzeugsitz entsprechend einstellt.

Eine weitere vorteilhafte Ausführungsform der Erfindung sieht vor, dass das Insassenschutzsystem einen Mechanismus aufweist, mittels welchem in einem Crashfall die elektronische Datenbrille aktiv vom Kopf des Fahrzeuginsassen befördert wird. Dieser Mechanismus kann beispielsweise Teil der elektronischen Datenbrille selbst oder auch fahrzeugseitig implementiert sein. Dadurch ist es möglich, dass im Crashfall, beispielsweise an bestimmten Schwellenwerten für Beschleunigungen festgemacht, die elektronische Datenbrille aktiv vom Kopf des Fahrzeuginsassen entfernt wird. Dadurch kann das Verletzungsrisiko aufgrund der aufgesetzten elektronischen Datenbrille, insbesondere im Crashfall, erheblich reduziert werden.

In weiterer vorteilhafter Ausgestaltung der Erfindung ist es vorgesehen, dass das Insassenschutzsystem eine an der elektronischen Datenbrille angeordnete Halteeinrichtung, insbesondere einen Haltegurt und/oder einen Bügel, umfasst, welcher in einem Crashfall automatisch gelöst wird, sodass die elektronische Datenbrille passiv vom Kopf des Fahrzeuginsassen befördert wird. Wird beispielsweise ein Haltegurt der elektronischen Datenbrille, ein Bügel oder dergleichen automatisch gelöst, so fällt die elektronische Datenbrille beispielsweise schwerkraftbedingt, und damit passiv, vom Kopf des Fahrzeuginsassen. Im Crashfall kann dies auch dazu führen, dass der Träger der elektronischen Datenbrille nicht mehr durch die elektronische Datenbrille verletzt wird, da er diese beispielsweise bei einem Aufprall auf einen Airbag oder auch auf andere Fahrzeugkomponenten die elektronische Datenbrille nicht mehr vor seinem Gesicht hat. Dies kann ebenfalls dazu beitragen, das Verletzungsrisiko beim Träger der elektronischen Datenbrille erheblich zu reduzieren.

Das erfindungsgemäße Insassenschutzsystem für ein Fahrzeug umfasst eine Erfassungseinrichtung und eine Steuereinrichtung sowie einen Airbag und/oder eine Ausgabeeinrichtung, welche dazu ausgelegt sind, das erfindungsgemäße Verfahren oder eine vorteilhafte Ausführungsform des erfindungsgemäßen Verfahrens durchzuführen. Vorteilhafte Ausgestaltungen des erfindungsgemäßen Verfahrens sind als vorteilhafte Ausgestaltungen des Insassenschutzsystems anzusehen. Insbesondere weist das Insassenschutzsystem Mittel zur Durchführung der Verfahrensschritte auf.

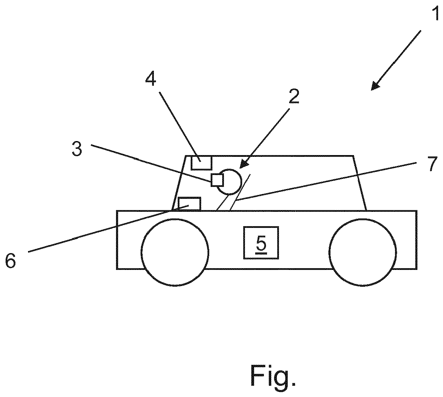

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in Alleinstellung oder auch in anderen Kombinationen verwendbar, ohne den Rahmen der Erfindung zu verlassen.

Die Zeichnung zeigt in der einzigen Fig. eine schematische Darstellung eines Kraftfahrzeugs, in welchem ein Fahrzeuginsasse sitzt, der eine elektronische Datenbrille aufgesetzt hat.

In einem Kraftfahrzeug 1 sitzt ein Fahrzeuginsasse 2, der eine elektronische Datenbrille 3 aufgesetzt hat. Bei der elektronischen Datenbrille 3 kann es sich beispielsweise um eine Virtual-Reality-Brille oder auch um eine Augmented-Reality-Brille handeln. Bei der elektronischen Datenbrille 3 handelt es sich um ein so genanntes Head-Mounted Display, oftmals auch mit HMD abgekürzt, bei welchem es sich um ein auf dem Kopf getragenes visuelles Ausgabegerät handelt. Beispielsweise kann die elektronische Datenbrille 3 ungefähr so breit und hoch wie eine größere Skibrille sein, wobei sie in Tiefenrichtung wesentlich größere Abmaße aufweist, um Elektronik und insbesondere Displays unterzubringen.

Fahrzeugseitig ist eine Erfassungseinrichtung 4 vorgesehen, welche dazu ausgelegt ist, zu erfassen, ob der Fahrzeuginsasse 2 die elektronische Datenbrille 3 aufgesetzt hat. Die Erfassungseinrichtung 4 ist darüber hinaus auch dazu ausgelegt, die Positionierung und Ausrichtung der elektronischen Datenbrille 3 relativ zum restlichen Fahrzeug zu ermitteln. Des Weiteren ist fahrzeugseitig eine Steuereinrichtung 5 vorgesehen, welche unter anderem das Auslöseverfahren eines Airbags 6 in Abhängigkeit davon steuern kann, ob der Fahrzeuginsasse 2 gerade die elektronische Datenbrille 3 aufgesetzt hat oder nicht. Die Erfassungseinrichtung 4, die Steuereinrichtung 5 und der Airbag 6 sind Teil eines hier nicht näher bezeichneten Insassenschutzsystems des Kraftfahrzeugs 1.

Mittels der Erfassungseinrichtung 4 wird vorzugsweise permanent überwacht, ob der Fahrzeuginsasse 2 die elektronische Datenbrille 3 aufgesetzt hat. Dafür kann die Erfassungseinrichtung 4 beispielsweise optische Sensoren, Kameras, ein oder mehrere Time-Of-Flight-Kameras oder dergleichen aufweisen. Das Insassenschutzsystem des Kraftfahrzeugs 1 wird in Abhängigkeit davon betrieben, ob der Fahrzeuginsasse 2 die elektronische Datenbrille 3 aufgesetzt hat. Die Steuereinrichtung 5 passt zumindest einen das Auslöseverhalten des Airbags 6 bestimmenden Parameter im Vergleich zu einer Standardeinstellung an, wenn der Fahrzeuginsasse 2 die elektronische Datenbrille 3 aufgesetzt hat.

Vor allem kann mittels der Erfassungseinrichtung 4 auch eine relative Anordnung der elektronischen Datenbrille 3 zum Airbag 6 ermittelt werden. Die Steuereinrichtung 5 kann in Abhängigkeit davon einen oder mehrere das Auslöseverhalten des Airbags 6 bestimmende Parameter im Vergleich zu einer Standardeinstellung, also wenn der Fahrzeuginsasse 2 die elektronische Datenbrille 3 nicht aufgesetzt hat, anpassen. Zudem kann die Erfassungseinrichtung 4 auch die Maße, also insbesondere die Breite, Höhe und Tiefe, der elektronischen Datenbrille 3 ermitteln.

Die Steuereinrichtung 5 kann unter Berücksichtigung der Maße der elektronischen Datenbrille 3 ebenfalls das Auslöseverhalten des Airbags 6 anpassen. Die Steuereinrichtung 5 kann insbesondere einen Auslösezeitpunkt, eine Befüllreihenfolge von hier nicht näher dargestellten Kammern des Airbags 6 und/oder einen Befüllgrad des Airbags 6 in Abhängigkeit davon anpassen, ob der Fahrzeuginsasse 2 die elektronische Datenbrille 3 überhaupt aufgesetzt hat, wie die elektronische Datenbrille 3 gerade zum Airbag 6 ausgerichtet und positioniert ist, wie groß die elektronische Datenbrille 3 ist, oder auch in Abhängigkeit davon, wie schwer die aufgesetzte elektronische Datenbrille 3 ist. Die Steuereinrichtung 5 stellt die besagten Parameter, welche das Auslöseverhalten des Airbags 6 bestimmen, derart ein, dass unter Berücksichtigung der elektronischen Datenbrille 3 das Verletzungsrisiko beim Auslösen des Airbags 6 minimiert wird.

Zudem ist es auch möglich, dass der Airbag 6 deaktiviert wird, solange erfasst wird, dass der Fahrzeuginsasse 2 die elektronische Datenbrille 3 aufgesetzt hat. Dies ist insbesondere dann sinnvoll, wenn der Fahrzeuginsasse 2 beispielsweise sehr klein ist, und seinen Fahrzeugsitz besonders weit nach vorne gerückt hat. Sollte es sich bei dem Airbag 6 beispielsweise um einen in einem hier nicht dargestellten Lenkrad angeordneten Kopfairbag handeln, so kann in der besagten Extremsituation es sogar sinnvoll sein, den Airbag 6 solange zu deaktivieren, wie der Fahrzeuginsasse 2 bei aufgesetzter elektronischer Datenbrille 3 einfach viel zu nahe am Airbag 6 sitzt.

Das nicht näher mit einem Bezugszeichen versehene Insassenschutzsystem kann zudem eine Ausgabeeinrichtung aufweisen, mittels welcher bei erfasster elektronischer Datenbrille 3 der Fahrzeuginsasse 2 optisch und/oder akustisch informiert wird, in wie fern er eine Positionierung seines Fahrzeugsitzes 7 verändern soll, um ein Verletzungsrisiko im Crashfall des Kraftfahrzeugs 1 bei nach wie vor aufgesetzter elektronischer Datenbrille 3 zu minimieren. Beispielweise können entsprechende Informationen mittels hier nicht näher dargestellter Displays der elektronischen Datenbrille 3 direkt ins Sichtfeld des Fahrzeuginsassen 2 eingeblendet werden. Alternativ oder zusätzlich ist es auch möglich, dass beispielsweise fahrzeugseitige Lautsprecher angesteuert werden, um diese Informationen auszugeben. Zudem ist es auch möglich, dass der Fahrzeuginsasse 2 beispielsweise Kopfhörer aufgesetzt hat, über welcher diese Informationen bezüglich der Verstellung des Fahrzeugsitzes 7 ausgegeben werden.

Dadurch, dass der Fahrzeuginsasse 2 bezüglich der Einstellung seines Fahrzeugsitzes 7 optisch und/oder akustisch instruiert werden kann, wird bei ihm das Bewusstsein dafür geschärft, dass bei aufgesetzter elektronischer Datenbrille 3 gegebenenfalls ein erhöhtes Verletzungsrisiko bestehen könnte. Durch Verstellung des Fahrzeugsitzes 7 kann der Fahrzeuginsasse 2 das Verletzungsrisiko reduzieren.

Zudem ist es auch möglich, dass das hier nicht näher bezeichnete Insassenschutzsystem einen hier ebenfalls nicht näher dargestellten Mechanismus umfasst, mittels welchem in einem Crashfall die elektronische Datenbrille 3 aktiv vom Kopf des Fahrzeuginsassen 2 befördert wird. Dieser Mechanismus kann beispielsweise Teil der elektronischen Datenbrille 3 oder auch fahrzeugseitig implementiert sein. Sollte beispielsweise anhand von Werten, die von Beschleunigungssensoren zurückgemeldet werden, erfasst werden, dass mit einem Unfall des Kraftfahrzeugs 1 zu rechnen ist, kann der Mechanismus entsprechend mittels der Steuereinrichtung 5 betätigt werden, infolgedessen die elektronische Datenbrille 3 aktiv mittels des Mechanismus vom Kopf des Fahrzeuginsassen 2 befördert wird.

Dies kann beispielsweise in Abhängigkeit davon erfolgen, ob ein Seitencrash, ein Frontalcrash oder ein Überschlag für das Kraftfahrzeug 1 prognostiziert wird. Je nachdem, mit was für einer Art von Unfall zu rechnen ist, kann es sinnvoll sein, den besagten Mechanismus zu betätigen und die elektronische Datenbrille 3 aus dem Gesicht des Fahrzeuginsassen 2 zu entfernen.

Alternativ oder zusätzlich ist es auch möglich, dass das Insassenschutzsystem eine an der elektronischen Datenbrille 3 angeordnete Halteeinrichtung, wie beispielsweise einen hier nicht dargestellten Haltegurt und/oder einen Bügel umfasst, wobei ein solcher Haltegurt und/oder Bügel automatisch gelöst wird, sodass die elektronische Datenbrille 3 passiv vom Kopf des Fahrzeuginsassen 2 befördert wird. Dies kann auch abgestimmt auf die zu erwartende Unfallsituation des Kraftfahrzeugs 1 abgestimmt erfolgen. Ist beispielsweise mit einem Seitencrash zu rechnen, so kann es ausreichen, dass die elektronische Datenbrille 3 passiv aus dem Gesicht des Fahrzeuginsassen 2 entfernt wird. Sollte allerdings mit einem Frontalcrash zu rechnen sein, so kann es beispielsweise auch sinnvoll sein, dass die elektronische Datenbrille 3 nicht passiv aus dem Gesichtsbereich des Fahrzeuginsassen 2 entfernt wird, da dies beispielsweise kritisch sein könnte, wenn der Airbag 6 auslöst.

Darüber hinaus ist es auch denkbar, dass Halteeinrichtungen fahrzeugseitig vorgesehen werden, welche im Crashfall die elektronische Datenbrille 3 derart fixieren können, dass diese nicht durch den Fahrzeuginnenraum gewirbelt wird, was wiederum zu einem erhöhten Verletzungsrisiko für den Fahrzeuginsassen 2 führen könnte.

Insgesamt wird durch das beschriebene Insassenschutzsystem eine Möglichkeit bereitgestellt, mittels welcher das Verletzungsrisiko bei einem Fahrzeuginsassen 2 trotz aufgesetzter elektronischer Datenbrille 3 erheblich reduziert werden kann.

## Patentansprüche

1. Verfahren zum Betreiben eines Insassenschutzsystems eines Fahrzeugs (1), bei welchem erfasst wird, ob ein Fahrzeuginsasse (2) eine elektronische Datenbrille (3) aufgesetzt hat, wobei das Insassenschutzsystem in Abhängigkeit davon betrieben wird, ob der Fahrzeuginsasse (2) eine elektronische Datenbrille (3) aufgesetzt hat, wobei
a das Insassenschutzsystem einen Airbag (6) aufweist und zumindest ein das Auslöseverhalten des Airbags (6) bestimmender Parameter im Vergleich zu einer Standardeinstellung angepasst wird, wenn der Fahrzeuginsasse (2) eine elektronische Datenbrille (3) aufgesetzt hat, wobei
a1 bei erfasster elektronischer Datenbrille (3) eine relative Anordnung der elektronischen Datenbrille (3) zum Airbag (6) ermittelt und Abhängigkeit davon zumindest ein das Auslöseverhalten des Airbags (6) bestimmender Parameter im Vergleich zu einer Standardeinstellung angepasst wird;
a2 und/oder bei erfasster elektronischer Datenbrille (3) Maße der elektronischen Datenbrille (3) ermittelt und Abhängigkeit davon zumindest ein das Auslöseverhalten des Airbags (6) bestimmender Parameter im Vergleich zu einer Standardeinstellung angepasst wird;
a3 und/oder der Airbag (6) deaktiviert wird, solange erfasst wird, dass der Fahrzeuginsasse (2) die elektronische Datenbrille (3) aufgesetzt hat;
b und/oder das Insassenschutzsystem eine Ausgabeeinrichtung umfasst, mittels welcher bei erfasster elektronischer Datenbrille (3) der Fahrzeuginsasse (2) optisch und/oder akustisch informiert wird, inwiefern er eine Positionierung eines Fahrzeugsitzes (7) verändern soll, auf dem er sitzt, um ein Verletzungsrisiko im Crashfall des Fahrzeugs (1) zu minimieren.

2. Verfahren nach Anspruch 1,
**dadurch gekennzeichnet, dass**
ein Auslösezeitpunkt des Airbags (6), eine Befüllreihenfolge von Kammern des Airbags (6) und/oder ein Befüllgrad des Airbags (6) angepasst wird.

3. Verfahren nach einem der vorhergehenden Ansprüche,
**dadurch gekennzeichnet, dass**
das Insassenschutzsystem einen Mechanismus umfasst, mittels welchem in einem Crashfall die elektronische Datenbrille (3) aktiv vom Kopf des Fahrzeuginsassen (2) befördert wird.

4. Verfahren nach einem der vorhergehenden Ansprüche,
**dadurch gekennzeichnet, dass**
das Insassenschutzsystem eine an der elektronischen Datenbrille (3) angeordnete Halteeinrichtung, insbesondere einen Haltegurt und/oder einen Bügel, umfasst, welche in einem Crashfall automatisch gelöst wird, sodass die elektronische Datenbrille (3) passiv vom Kopf des Fahrzeuginsassen (2) befördert wird.

5. Insassenschutzsystem für ein Fahrzeug (1), umfassend eine Erfassungseinrichtung (4) und eine Steuereinrichtung (5), sowie einen Airbag (6) und/oder eine Ausgabeeinrichtung, welche dazu ausgelegt sind, ein Verfahren nach einem der vorhergehenden Ansprüche durchzuführen.

## Claims

1. Method for operating an occupant protection system of a vehicle (1), in which there is detected whether a vehicle occupant (2) has donned electronic smart glasses (3), wherein the occupant protection system is operated in dependence on whether the vehicle occupant (2) has donned electronic smart glasses (3), wherein
a the occupant protection system has an airbag (6) and at least one parameter that determines trigger behaviour of the airbag (6) is adjusted in comparison with a standard setting when the vehicle occupant (2) has donned electronic smart glasses (3), wherein
a1 where electronic smart glasses (3) are detected, a relative arrangement of the electronic smart glasses (3) to the airbag (6) is ascertained and dependence thereon at least one parameter that determines trigger behaviour of the airbag (6) is adjusted in comparison with a standard setting;
a2 and/or where electronic smart glasses (3) are detected, dimensions of the electronic smart glasses (3) are ascertained and dependence thereon at least one parameter that determines trigger behaviour of the airbag (6) is adjusted in comparison with a standard setting;
a3 and/or the airbag (6) is deactivated, so long as it is detected that the vehicle occupant (2) has donned the electronic smart glasses (3);
b and/or the occupant protection system comprises an output device, by means of which, where electronic smart glasses (3) are detected, the vehicle occupant (2) is visually and/or acoustically informed as to how far he should alter a position of a vehicle seat (7) on which he is sitting in order to minimise the risk of injury in the event the vehicle (1) crashes.

2. Method according to claim 1,
**characterised in that**
a trigger time of the airbag (6), a filling sequence of chambers of the airbag (6) and/or a degree of filling of the airbag (6) is adjusted.

3. Method according to any one of the preceding claims,
**characterised in that**
the occupant protection system comprises a mechanism by means of which in the event of a crash the electronic smart glasses (3) are actively conveyed from the head of the vehicle occupant (2).

4. Method according to any one of the preceding claims,
**characterised in that**
the occupant protection system comprises a retaining device arranged on the electronic smart glasses (3), in particular a retaining strap and/or a bracket, which is automatically released in the event of a crash so that the electronic smart glasses (3) are passively conveyed from the head of the vehicle occupant (2).

5. Occupant protection system for a vehicle (1), comprising a detection device (4) and a control device (5), and an airbag (6) and/or an output device, which are adapted to carry out a method according to any one of the preceding claims.

## Revendications

1. Procédé pour faire fonctionner un système de protection des occupants d'un véhicule (1), dans lequel il est détecté si un occupant du véhicule (2) a mis des lunettes de données électroniques (3), dans lequel le système de protection des occupants est actionné en fonction du fait que l'occupant du véhicule (2) a mis des lunettes de données électroniques (3), dans lequel
a le système de protection des occupants présente un airbag (6) et au moins un paramètre déterminant le comportement de déclenchement de l'airbag (6) est adapté, par rapport à un réglage standard, lorsque l'occupant du véhicule (2) a mis des lunettes de données électroniques (3), dans lequel
a1 lorsque des lunettes de données électroniques (3) sont détectées, une disposition relative des lunettes de données électroniques (3) par rapport à l'airbag (6) est déterminée et, fonction de cela, au moins un paramètre déterminant le comportement de déclenchement de l'airbag (6) est adapté par rapport à un réglage standard ;
a2 et/ou lorsque des lunettes de données électroniques (3) sont détectées, des dimensions des lunettes de données électroniques (3) sont déterminées et, fonction de celles-ci, au moins un paramètre déterminant le comportement de déclenchement de l'airbag (6) est adapté par rapport à un réglage standard ;
a3 et/ou l'airbag (6) est désactivé tant qu'il est détecté que l'occupant du véhicule (2) a mis les lunettes de données électroniques (3) ;
b et/ou le système de protection des occupants comprend un dispositif de sortie au moyen duquel, lorsque des lunettes de données électroniques (3) sont détectées, l'occupant du véhicule (2) est informé de manière optique et/ou acoustique de la mesure dans laquelle il doit modifier un positionnement d'un siège de véhicule (7) sur lequel il est assis, afin de minimiser un risque de blessure en cas de collision du véhicule (1).

2. Procédé selon la revendication 1,
**caractérisé en ce que**
un moment de déclenchement de l'airbag (6), un ordre de remplissage de poches de l'airbag (6) et/ou un degré de remplissage de l'airbag (6) sont adaptés.

3. Procédé selon l'une quelconque des revendications précédentes,
**caractérisé en ce que**
le système de protection des occupants comprend un mécanisme au moyen duquel, en cas de collision, les lunettes de données électroniques (3) sont enlevées activement de la tête de l'occupant du véhicule (2).

4. Procédé selon l'une quelconque des revendications précédentes,
**caractérisé en ce que**
le système de protection des occupants comprend un dispositif de retenue agencé sur les lunettes de données électroniques (3), en particulier une ceinture de retenue et/ou un arceau, qui est détaché automatiquement en cas de collision, de sorte que les lunettes de données électroniques (3) sont enlevées passivement de la tête de l'occupant du véhicule (2).

5. Système de protection des occupants d'un véhicule (1), comprenant un dispositif de détection (4) et un appareil de commande (5), ainsi qu'un airbag (6) et/ou un dispositif de distribution, lesquels sont conçus pour mettre en œuvre un procédé selon l'une quelconque des revendications précédentes.
